# EUROPÄISCHE PATENTANMELDUNG

(11) **EP 0 749 943 A2**
(43) Veröffentlichungstag der Anmeldung: **27.12.1996**
(21) Anmeldenummer: 96109703.7
(22) Anmeldetag: 17.06.1996
(51) Int. Cl.: C02F 3/30, C02F 3/12

(54) **Verfahren und Anlage zum Reinigen von Abwasser**

(30) Priorität: 22.06.1995 DE 19522658
(71) Anmelder: Von Nordenskjöld, Reinhart, Dr.-Ing., D-85658 Egmating-Münster (DE)
(72) Erfinder: Von Nordenskjöld, Reinhart, Dr.-Ing., D-85658 Egmating-Münster (DE)
(74) Vertreter: von Füner, Alexander, Dr.

(57) **Zusammenfassung**

Gegenstand der Erfindung ist ein Verfahren und eine Anlage zum Reinigen von Abwasser in mehreren aufeinanderfolgenden Phasen, wobei in der ersten Phase (A) das Abwasser belüftet und in einer zweiten Phase (B), die auch eine Schlammrückführung aufweist, zwischengeklärt wird und wobei dann gegebenenfalls in einer dritten Phase (C) eine Nachbelüftung und in einer vierten Phase (D) eine Nachsedimentation erfolgt, wobei man die Reaktionsprozesse in einer vorgeschalteten anaeroben Phase beeinflußt, indem man die Verweilzeit durch Volumenanpassung verändert.

## Beschreibung

Die vorliegende Erfindung betrifft ein Verfahren und eine Anlage zum Reinigen von Abwasser.

Aus der DE-PS 4 236 791 sind ein Verfahren und eine Anlage bekannt, die das Reinigen von Abwasser in mehreren aufeinanderfolgenden Phasen zeigen. Bei diesem bekannten Verfahren wird in einer ersten Phase A das Abwasser belüftet und dann in einer zweiten Phase B, die auch eine Schlammrückführung aufweist, zwischengeklärt, wobei dann in einer dritten Phase C eine Nachbelüftung und in einer vierten Phase D eine Nachsedimentation erfolgt. Alle vier Phasen A-D werden in einem Becken durchgeführt. In der Belüftungsphase A wird das Abwasser in einen Belebtschlammbereich A des Beckens eingelassen und dann mit Luft oder Sauerstoff belüftet und umgewälzt, so daß ein aerober Abbauprozeß ablaufen kann. Das Abwasser strömt dann für die Zwischenklarphase B in Hauptströmungsrichtung aus dem Belebtschlammbereich A durch mindestens eine Auslaßöffnung, die im unteren Bereich in bezug auf den Beckenboden einer ersten Trennwand angeordnet ist, in den Zwischenklärbereich B. Dort setzt sich der Belebtschlamm ab und wird mit Hilfe eines Schlammaufnehmers aufgenommen. Dann strömt das Abwasser in der Phase der Nachbelüftung C aus dem Zwischenklärbereich B über Auslaßöffnungen am in bezug auf den Beckenboden oberen Bereich einer zweiten Trennwand in den Nachbelüftungsbereich C, wo es erneut mit Sauerstoff belüftet und umgewälzt wird. Schließlich fließt das Abwasser in der Nachsedimentationsphase D aus dem Nachbelüftungsbereich C durch den unteren Bereich einer weiteren Trennwand in den Nachsedimentationsbereich D.

Gemäß DE-PS 4 236 791 kann dem Phasenbereich A auch ein sogenanntes Bio-P-Becken vorgeschaltet sein.

Das Abwasser wird in dem Bio-P-Becken anaerob behandelt. Dies dient der Förderung der biologischen Eliminierung von Phosphorverbindungen, wobei die Fähigkeit der Bakterien, im aeroben Teil der Anlage erhöhte Phosphormengen zu speichern, ausgenutzt wird, indem diesem im sogenannten Belebtschlammbecken eine anaerobe Phase vorgeschaltet wird. Für die Verweilzeit des Abwassers und auch des Rücklaufschlammes, der aus dem Belebtschlammbecken in das Bio-P-Becken eingeleitet wird, gibt es eine bestimmte optimale Verweilzeit von etwa 1½ Stunden. Die Größe des vorgeschalteten Bio-P-Beckens entspricht dieser Normzeit von 1½ Stunden. Das Bio-P-Becken ist an Schwankungen in den Tagesmengen bzw. sich über die Zeit ändernde Mengen - etwa bei Saisonbetrieben - des anfallenden Abwassers und damit an die Verweilzeit t_{BP}, an die Jahreszeiten und damit an die Temperatur, an die Menge der Säuerungsbakterien, an die Menge der säuerungsfähigen Substanzen und ihrer Zusammensetzung sowie an das O₂-Potential sowie allgemein an unterschiedliche Abwässer nicht anpassungsfähig.

Es war also Aufgabe der Erfindung, die bekannten Abwasserreinigungsverfahren an die jeweils notwendigen Klärbedingungen anzupassen.

Diese Aufgabe wurde, wie aus den nachstehenden Ansprüchen ersichtlich, gelöst.

Gegenstand der Erfindung ist also ein Verfahren zum Reinigen von Abwasser in mehreren aufeinanderfolgenden Phasen, wobei in der ersten Phase A das Abwasser belüftet und dann in einer zweiten Phase B, die auch eine Schlammrückführung aufweist, zwischengeklärt wird und wobei dann gegebenenfalls in einer dritten Phase C eine Nachbelüftung und in einer vierten Phase D eine Nachsedimentation erfolgt, dadurch gekennzeichnet, daß man die Reaktionsprozesse in einer vorgeschalteten anaeroben Phase beieinflußt, indem man die Verweilzeit durch Volumenanpassung verändert.

In besonderen Fällen kann man die Schlammrück- oder -zufuhr in die anaerobe Phase erhöhen. Man kann jedoch statt der Schlammrück- oder -zufuhr in gewissen Fällen auch Rückflußwasser zugeben. Diesem Rückflußwasser wird gegebenenfalls auch Überschußschlamm beigefügt.

Ferner ist es bevorzugt, daß man in der anaeroben Phase Sauerstoff aufnehmende Substanzen zudosiert.

Man kann auch das Becken der anaeroben Phase abdecken.

Außerdem ist es bevorzugt, daß man die Aufenthaltszeit verändert.

In der Vergangenheit hat sich herausgestellt, daß durch die Immobilität der anaeroben Phase Schwankungen durch Einlassen des Abwassers in Zusatzbecken ausgeglichen werden können. Außerdem können Defekte in der Zeit mangelnder Kontrolle, also nachts, nicht im notwendigen Maße ausgeglichen werden. Dies kann dadurch entstehen, daß die Zusammensetzung des Abwassers, beispielsweise durch die Industrie, schlagartig geändert wird, z.B. kann sich die Menge der säuerungsfähigen Substanzen und ihre Zusammensetzung ändern. Es kann zu Temperaturschwankungen kommen und im Extremfall ist es auch möglich, daß im anaeroben Teil Sauerstoff zutritt. Dies alles kann dazu führen, daß der anaerobe Vorgang nicht ausreichend erfolgt und das Abwasser dann in das Belebtschlammbecken gelangt und die Phosphatausscheidung vermindert wird, oder daß der anaerobe Vorgang zu intensiv vonstatten geht, was zu schwerwiegenden Schäden am Belebtschlamm führt und mit großen Geruchsbelästigungen verbunden ist.

Die Verweilzeit kann auf sehr einfache und effektive Weise erhöht werden, indem man das Volumen der anaeroben Phase erhöht. Eine gute auch kurzfristig wirksame zusätzliche Maßnahme ist die Zufuhr von mehr Rücklaufschlamm oder Rücklaufwasser, denen auch Überschußschlamm beigegeben werden kann, wobei dies als ein Beispiel einer typischen sauerstoffzehrenden Komponente den Säuerungsprozeß ganz oder teilweise unterstützen kann.

Die Volumenveränderungen richten sich je nach den apparativen Gegebenheiten der entsprechenden Becken und werden bei den Ausführungen zu einer Anlage im einzelnen erläutert.

Es war ferner Aufgabe der Erfindung, eine Anlage mit variabler Kapazität der anaeroben Vorzone vorzuschlagen. Diese Anlage sollte es ermöglichen, sich ohne großen Aufwand relativ schnell verändernden Klärbedingungen anzupassen, d.h. schwankenden oder veränderten Mengen bzw. Inhaltsstoffen. Diese Aufgabe wird, wie aus den nachstehenden Vorrichtungsansprüchen ersichtlich, gelöst.
- Fig. 1: zeigt in Draufsicht eine Anlage, in der anaeorbe und aerobe Phase in getrennten Becken ablaufen,
- Fig. 2: zeigt in Draufsicht eine Anlage, in der die anaerobe Phase in dem gleichen Becken, aber abgetrennt abläuft wie die aerobe,
- Fig. 3: zeigt einen Schnitt durch das Becken von Fig. 2 und
- Fig. 4: zeigt die zwei Varianten A und X der Bio-P-Becken mit den Möglichkeiten der Volumenveränderungen.

Wie schon eingangs bei der Beschreibung des Verfahrens erwähnt, war es bisher nicht möglich, die vorhandenen Anlagen bezüglich der biologischen Phosphateliminierung veränderten Klärbedingungen anzupassen. Obwohl man das Bedürfnis zur Anpassung schon lange hatte, war eine einfache Lösung nicht in Sicht. Jeder weiß, daß nicht nur das Kanalnetz der zu entsorgenden Räume je nach Tageszeit und je nach Jahreszeit enormen Schwankungen unterworfen ist, von Schneeschmelzen und Gewittergüssen ganz abgesehen, die nicht nur verschiedene Wassermengen bringen, sondern auch Sauerstoff zuführen. Auch die Zusammensetzung des zu klärenden Abwassers ändert sich, insbesondere wenn Industriewasser zu den reinen Haushaltswassern zugesetzt werden.

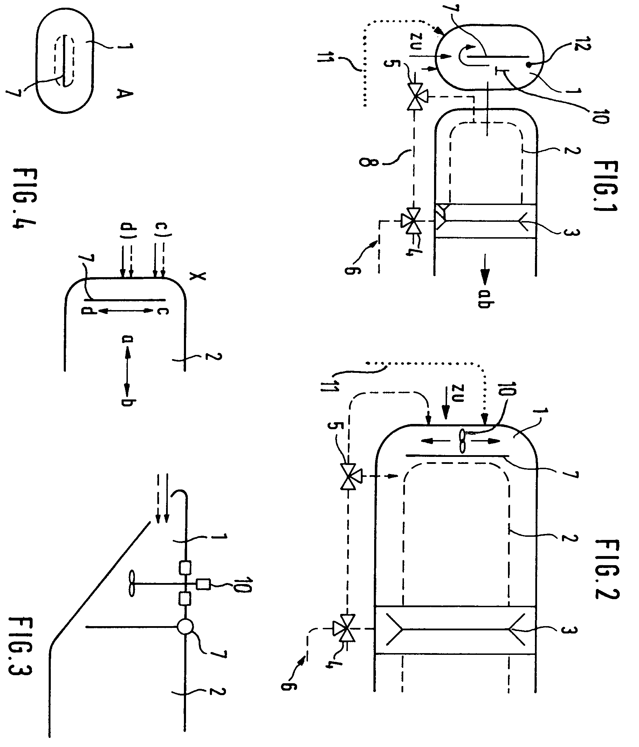

Man weiß ferner, daß einer der Hauptparameter für die biologische Phosphateliminierung die Verweilzeit des Abwassers in der anaeroben Phase von etwa 1½ Stunden wichtig ist. Die Verweilzeit t_{BP} hängt natürlich von der Temperatur, von der Menge der Säuerungsbakterien, von der Menge der säuerungsfähigen Substanzen und ihrer Zusammensetzung, vom O₂-Potential und auch von der möglichen O₂-Zufuhr und anderen bisher noch nicht bekannten, aber im wesentlichen wohl zeitabhängigen Faktoren ab, d.h. auch die optimale Verweilzeit kann von Fall zu Fall verschieden sein, was schon bei der Planung zu großen Dimensionierungskonflikten führt und deshalb schon lange der Wunsch vorhanden war, eine auch von der optimalen Verweilzeit t_{BP} her nach dem Bau der Anlage anpassungsfähige Einrichtung zu besitzen. Ist die Verweilzeit zu lang, ist für die Umgebung die Geruchsbelästigung oft nicht mehr akzeptabel. Außerdem wird der Belebtschlamm geschädigt, was vermieden werden muß. Die Lösung der gestellten Aufgabe wird ganz einfach erreicht durch Volumenänderung des Beckens für die anaerobe Phase, d.h. des sogenannten Bio-P-Beckens. Dieses Konzept wird anhand der Figuren 1 bis 4 näher erläutert.

In der Praxis gibt es z.Zt. zwei verschiedene Ausführungsformen von Anlagen zur Reinigung von Abwasser mittels Belebtschlamm. In Fig. 1 ist ein Bio-P-Becken 1 von dem Belebtschlammbecken 2 räumlich getrennt vorgesehen. Das Belebtschlammbecken 2 ist dabei in mehrere Kammern aufgeteilt, die jedoch nicht alle für die vorliegende Erfindung von Interesse sind. Das Abwasser und der Rücklaufschlamm werden dem Bio-P-Becken 1 zugeleitet und dort um eine Trennwand 7 vom Rührwerk 10 voll umgewälzt. Das Gemisch wird dann in das Belebtschlammbecken 2 geleitet und nach Klärung in das Nachklärbecken 3, das ebenfalls in seinem Volumen variabel ist. Aus dem Nachklärbecken 3 gelangt der Belebtschlamm ganz oder teilweise zu den Verteilerstationen 4 und 5. Je nach Notwendigkeit wird der ganze Belebtschlamm oder ein Teil davon über die (gestrichelt gezeichnete) Leitung 8 wieder zusammen mit dem zu reinigenden Abwasser ins Vorbecken eingeleitet und/oder direkt dem Becken 2 und/oder ein Teil dem Überschußbecken durch Leitung 6 zugeführt. Außerdem kann auch das Rücklaufwasser über die (gepunktet gezeichnete) Leitung 11 wieder in den Prozeß eingeführt werden. Falls notwendig kann dem Rücklaufwasser auch Überschußschlamm zugeführt werden.

Das aus dem Nachklärbecken 3 austretende Wasser wird in bekannter Weise weiterbehandelt, z.B. wie in DE-PS 4 236 791.

Nach einer anderen Variante ist die anaerobe Phase in die einstückige Anlage eingebaut (Fig. 2). Das Abwasser wird am Kopfende der Anlage in das Bio-P-Abteil 1 eingeleitet, das durch eine Trennwand 7 vom Belebtschlammabteil 2 getrennt ist. Nachgeschaltet wie in der Ausführung von Fig. 1 ist dann das Nachklärabteil 3. Auch hier wird der Belebtschlamm in der Station 4 eventuell getrennt, wobei ein Teil über die (gestrichelt gezeichnete) Leitung 8 wieder am Kopfende in das Bio-P-Becken eingeleitet wird und ein eventueller Rest in ein Vorrats- oder Überschußbecken über Leitung 6 verbracht wird. Ebenso kann z.B., wenn kein Überschußschlamm abgezogen werden soll, eine Mengentrennung in Station 5 stattfinden, um einen bestimmten Teilstrom des Rücklaufschlammes über Leitung 9 direkt dem Becken 2 zuzugeben.

Die Weiterbehandlung des Abwassers erfolgt auch hier in an sich bekannter Weise.

In dem Bio-P-Becken läuft ein Säuerungsvorgang ab, wobei im Abwasser hochwertigere bzw. energetisch höhere Nahrung für die Bakterien des Belebtschlammbeckens gebildet werden, die es den Bakterien gestattet, eine höhere biologische Phosphoraufnahme zu vollbringen. Man sagt, es geht so weit, daß Phosphor als Phosphat in Kristallform umgebaut und dadurch in deutlich höherer Menge - Steigerungen von 30% auf 90% Phosphataufnahme wurden oft beobachtet - aufgenommen wird.

Das Abwasser in dem einstückigen Becken wird nicht belüftet oder total umgewälzt, sondern nur, wie in Fig. 3 gezeigt, mittels Rührer 10 gerührt und von Zeit zu Zeit durchmischt.

Hat man erkannt, daß es notwendig ist, das Volumen der Bio-P-Zone den jeweiligen Anforderungen anzupassen und damit Geruchsbelästigung und ein Absterben des Belebtschlammes zu verhindern und den optimalen "Bio-P-Effekt" sicherzustellen, so kann man bei den zwei in Fig. 1 und 2 gezeigten Anlagen die notwendigen Vorkehrungen treffen, wie Fig. 4 zeigt. In der Variante A des ovalen, vom Belebtschlammbecken räumlich getrennten Bio-P-Beckens kann z.B. die Trennwand 7 so ausgestaltet werden, daß sie das Volumen des Beckens verändert. Dies kann geschehen, indem man die Trennwand 7 aufblasbar gestaltet oder in Form von zwei Trennwänden, die nach dem Ziehharmonikaprinzip auseinandergeschoben werden und damit ein Hohlraum geschaffen wird. Die Mittelwand 7 wird also aufgeblasen, geschrumpft oder sie fällt auseinander und wieder zusammen.

Bei der einstückigen Variante X kann die Trennwand 7 verschieden ausgestaltet werden. Einmal wird sie in Richtung a-b verschoben. Sie kann auch in Richtung c-d oder d-c aufgerollt werden, wobei sich beim Aufrollen in der d-c-Variante dann am besten auch die Zufuhr von frischem Abwasser und Belebtschlamm gleichermaßen in Richtung c, wie gezeigt, erfolgt.

Die Variante A kann jedoch in ähnlicher Weise wie die Variante X ausgestaltet werden, wenn man das Becken statt oval quadratisch oder rechteckig ausgestaltet. Man kann dann ebenfalls einen oder zwei Vorhänge vorsehen, die sich innerhalb des Beckens verschieben lassen.

Die Leistungsfähigkeit der Anlage kann insbesondere zur kurzfristigen Anpassung noch zusätzlich verbessert werden durch eine erhöhte Schlammrück- oder -zufuhr, d.h. daß ein Teil oder die ganze Menge des abgeführten bzw. im Kreis geführten Belebtschlammes wieder in die Bio-P-Phase geleitet wird oder, falls dies nicht ausreicht, auch aus dem Überschußbecken der Belebtschlamm wieder in den Kreislauf zurückgeführt wird oder auch Rücklaufwasser zum Einsatz kommt, wie in Fig. 2 durch die Leitung 11 angegeben.

Eine Leistungssteigerung der Phosphatentnahme kann auch durch Zudosierung O₂-aufnehmender Substanzen erfolgen, z.B. durch erhöhte Zufuhr sauerstoffzehrender Schmutzstoffe aus einem Pufferbecken in 1.

Eine weitere Möglichkeit besteht darin, einen Wasserkreislauf zur Verringerung des Aufenthaltszeitraums t_{BP} vom Ende des Beckens bzw. der Becken her zu betreiben, wie mit 11 angedeutet.

Schlußendlich kann man auch das Bio-P-Becken zur Verminderung der Geruchsbelästigung abdecken oder schließen, falls die Regelung bei extremen Veränderungen nicht nachkommt.

Die anaerobe Phase ist der aeroben Belebtschlammphase vorgeschaltet. Die anaerobe Phase hat folgende Hauptabhängigkeiten:
a) Verweilzeit t_{BP}
b) Temperatur
c) Menge der Säuerungsbakterien
d) Menge der "säuerungsfähigen" Substanzen und ihre Zusammensetzung
e) O₂-Potential, d.h. auch mögliche O₂-Zufuhr (O₂ ist schlecht!)
f) Redox-Potential
g) und andere noch nicht erforschte, im wesentlichen wohl zeitabhängige Faktoren.

Die Aufenthaltsdauer des Abwassers im aeroben Prozeß beträgt nicht Stunden, sondern zumeist Tage. Insofern ist eine schlagartige Anpassung an äußere Umstände für diesen Teil nicht notwendig. Der aerobe Belebtschlammprozeß ist jedoch insbesondere bezüglich der biologischen Phosphatentnahme abhängig von dem anaeroben Vorgang der vorgeschalteten Phase. Läuft dort etwas schief, dann kann es zum Zusammenbruch der aeroben Belebtschlammphase kommen und damit kann ein Abschalten der Anlage notwendig werden; es findet keine Reinigung statt!

Die Verhältnisse während der Bio-P-Phase sollten zweckmäßig kontrolliert werden. Bei den Anlagen ist wie gesagt der Änderungsfall bzw. der Notstand nicht immer vorhersehbar, insbesondere zu Nachtzeiten und an Sonn- und Feiertagen. Es ist also zweckmäßig die Vorgänge zu kontrollieren, am einfachsten natürlich mit der Nase, nach dem Motto, wenn es stinkt, dann ist es dringend notwendig, irgendetwas zu unternehmen. Es ist natürlich mühsam, bei Wind und Wetter in regelmäßigen Abständen die Anlage zu beriechen. Außerdem kann bei derartigen Messungen die Nase versagen und es zu spät sein für eine entsprechende Reaktion durch Regelung. Dem kann man entgehen, indem man in Zeitabständen oder kontinuierlich Messungen durchführt, und zwar Labormessungen und das entweder absatzweise oder kontinuierlich, wobei wohl die kontinuierliche Messung im Labor durch einen Teilstrom oder direkt in 1 die sicherste sein wird. Gemessen wird neben Analysen u.a. auch kontinuierlich das Redox-Potential in mV. Solche Messungen wurden vom Anmelder in Bio-P-Becken mit festem Volumen erprobt, z.B. am Meßpunkt 12. Diese Messungen zeigten über viele Monate die Notwendigkeit der Volumenanpassung. Sie ist auch die derzeitige Basis, um die Volumenverändung des Bio-P-Beckens automatisch anzusteuern; diesbezügliche andere Meßmethoden und Verfahren sind in der Entwicklung.

Man kann auch den pH-Wert messen, wie eigene Versuche zeigten; hier ist aber einschränkend zu sagen, daß dies nicht bei allen Abwassermessungen bzw. -arten gleich gut funktioniert.

Darüber hinaus kommt zur automatischen Ansteuerung der Volumenveränderung die kontinuierliche oder absatzweise Messung der Zulaufmenge, der Zulauftemperatur, der Lufttemperatur oder der Beckentemperatur in Frage, ebenso wie die Erfassung aller anderen beteiligten Mengenströme.

Es soll noch einmal darauf hingewiesen werden, daß die weitere Bearbeitung des Abwassers oder des Belebtschlammes, etwa in der Weise wie in der DE 4 236 791 beschrieben, nicht erfindungswesentlich ist.

## Patentansprüche

1. Verfahren zum Reinigen von Abwasser in mehreren aufeinanderfolgenden Phasen, wobei in der ersten Phase (A) das Abwasser belüftet und in einer zweiten Phase (B), die auch eine Schlammrückführung aufweist, zwischengeklärt wird und wobei dann gegebenenfalls in einer dritten Phase (C) eine Nachbelüftung und in einer vierten Phase (D) eine Nachsedimentation erfolgt, dadurch **gekennzeichnet,** daß man die Reaktionsprozesse in einer vorgeschalteten anaeroben Phase beeinflußt, indem man die Verweilzeit durch Volumenanpassung verändert.

2. Verfahren nach Anspruch 1, dadurch **gekennzeichnet** , daß man die Schlammrück- oder -zufuhr in die anaerobe Phase variiert.

3. Verfahren nach Anspruch 1, dadurch **gekennzeichnet,** daß man Rücklaufwasser der anaeroben Phase zugibt.

4. Verfahren nach Anspruch 3, dadurch **gekennzeichnet,** daß man dem Rücklaufwasser Überschußschlamm zugibt.

5. Verfahren nach Anspruch 1 oder 2, dadurch **gekennzeichnet,** daß man in der anaeroben Phase Sauerstoff aufnehmende Substanzen zudosiert.

6. Verfahren nach einem der Ansprüche 1 bis 3, dadurch **gekennzeichnet,** daß man das Becken der anaeroben Phase abdeckt.

7. Verfahren nach einem der Ansprüche 1 bis 4, dadurch **gekennzeichnet,** daß man die Aufenthaltszeit verändert.

8. Verfahren nach einem der Ansprüche 1 bis 5, dadurch **gekennzeichnet,** daß man durch eine kontinuierliche Redox-Messung das Bio-P-Verfahren ganz oder teilweise automatisiert.

9. Anlage zum Reinigen von Abwasser mit einem Bio-P-Becken, einem Belebtschlammbereich, einem Nachklärbecken und einer Rückführungsleitung für den Belebtschlamm vom Nachklärbereich zum Eingang des Bio-P-Beckens bzw. Belebtschlammbereiches, dadurch **gekennzeichnet,** daß das Volumen des Bio-P-Beckens (1) veränderbar gestaltet ist.

10. Anlage nach Anspruch 7, dadurch **gekennzeichnet,** daß bei einem vom Belebtschlammbereich (2) räumlich getrennten Bio-P-Becken (1) die Trennwand (7) aufblasbar ist.

11. Anlage nach Anspruch 7, dadurch **gekennzeichnet,** daß bei einem vom Belebtschlammbereich (2) räumlich getrennten Bio-P-Becken (1) die Trennwand (7) ausziehbar gestaltet ist.

12. Anlage nach Anspruch 7, dadurch **gekennzeichnet,** daß bei einem vom Belebtschlammbereich (2) räumlich getrennten Bio-P-Becken (1) die Trennwand (7) horizontal verschiebbar ausgestaltet ist.

13. Anlage nach Anspruch 7, dadurch **gekennzeichnet,** daß bei einem vom Belebtschlammbereich (2) räumlich getrennten Bio-P-Becken (1) die Trennwand (7) als Vorhang ausgebildet ist, der sich vertikal aufrollen läßt und wobei der Zufluß an Abwasser und Belebtschlamm ebenfalls verschiebbar ausgebildet ist.

14. Anlage nach Anspruch 7 bis 11, dadurch **gekennzeichnet,** daß das Bio-P-Becken (1) eine verschiebbare Abdeckung besitzt.
